# EUROPEAN PATENT SPECIFICATION

(11) **EP 2 413 507 B1**
(45) Date of publication and mention of the grant of the patent: **08.07.2015**
(21) Application number: 10171531.6
(22) Date of filing: 30.07.2010
(51) Int. Cl.: H04B 1/16, H04W 52/02, H04W 84/18

(54) **Method and apparatus for reducing power consumption of a mobile telecommunication device**
Verfahren und Vorrichtung zum Reduzieren des Energieverbrauchs eines Mobiltelekommunikationsgerätes
Procédé et appareil pour réduire la consommation d'énergie d'un dispositif de télécommunication mobile

(43) Date of publication of application: 01.02.2012
(73) Proprietor: ThinxNet GmbH, 80469 München (DE)
(72) Inventor: Malek, Moni, 81677, München (DE)
(74) Representative: Dendorfer, Claus

(56) References cited:
- US-A1- 2005 122 233
- US-A1- 2006 025 180
- US-A1- 2008 070 614

## Description

### FIELD OF THE INVENTION

The present invention relates to the field of telecommunication. More precisely, the invention relates to reducing power consumption of a telecommunication device.

### BACKGROUND OF THE INVENTION

Mobile telecommunication networks, especially networks according to the Global System for Mobile Communication (GSM) and Universal Mobile Telecommunications System (UMTS) standards, have become ubiquitous. There is a growing need for tracking or metering devices to transmit data - such as metering information or tracking information - via a mobile telecommunication network to a server, a control room, or another telecommunication device. Tracking or metering devices may send data or even initiate voice calls, but may also have reception capabilities like any other conventional telecommunication device. For example, the reception capabilities can be used to control electrical appliances for energy management, or to control gas devices to switch off gas in an emergency or in response to other events. In general, the reception capabilities allow access to a device for configuration or for requesting data.

Currently available metering devices are typically unidirectional, i.e., they are only capable of sending data without reception capabilities. This approach circumvents the high power consumption that is required for receiving messages. The power consumption of tracking or metering devices that are realized as bidirectional devices and that are based on current mobile telecommunication technology would be similar to that of conventional mobile handsets, although the tracking or metering devices only transmit small amounts of data.

One major cause for power consumption in a telecommunication device is the receiver listening for messages from the mobile telecommunication network. A telecommunication device in an idle mode periodically receives location update messages and in case of an incoming call or incoming messages like SMS, MMS, pushed USSD or any other data, the telecommunication device will receive a paging request.

It is known to reduce the power consumption of a telecommunication device by the feature of discontinuous reception (DRX): The mobile telecommunication network organizes the telecommunication devices in various paging groups, wherein each paging group receives paging requests in a certain paging block that is part of a paging cycle. This concept allows the telecommunication device to turn off the receiver most of the time. The receiver is only turned on during a paging block assigned to the paging group of the telecommunication device. It is common to have a paging cycle in the range of a few seconds. A longer paging cycle would result in long incoming call establishment times or delayed reception of messages, as the telecommunication device can only be contacted during the time windows resulting from the assigned paging blocks.

US 2006/0025180 A1 discloses a method of reducing power consumption by waking wireless devices in an ad-hoc network at wakeup times determined by a unique identifier.

US 2005/0122233 A1 discloses a telemetering system comprising a wireless base station and a number of wireless sensor nodes. The wireless base station controls individual activation times for each wireless sensor node during which the wireless sensor node transmits sensor data.

### OBJECTS AND SUMMARY OF THE INVENTION

It is an object of the present invention to reduce the power consumption of telecommunication devices that only need to communicate from time to time with a telecommunication network.

The present invention is defined by the independent claims. The dependent claims concern optional features of some embodiments of the invention.

The present invention is based on the idea that a telecommunication device determines at least a start time of a listening period for messages received from the mobile telecommunication network. The telecommunication device directly obtains current time information from a time reference that is independent from the time frame structure of the mobile telecommunication network. When the determined start time of the listening period matches the current time, at least the receiver of the telecommunication device is turned on. By the end of the listening period at the latest, at least the receiver of the telecommunication device is turned off again.

A prerequisite for this approach is that the telecommunication device is able to determine the point of time when the next message being sent from the mobile telecommunication network may arrive. In most applications in which tracking or metering devices are involved, it may be sufficient that the telecommunication device provides its data or is ready for configuration tasks during well-defined rendezvous periods in a cycle of several minutes or several hours. This is far beyond the page cycle limit of conventional discontinuous reception (DRX).

Besides the benefit of a highly reduced power consumption, the present invention reduces the signaling load in a mobile telecommunication network, thereby making it feasible to support large numbers of telecommunication devices according to the present invention. The amount of location update messages can be reduced by assigning long periods to the location updates of such devices.

In some embodiments of the present invention, the sleeping time between two listening periods is at least 1 minute, or at least 5 minutes, or at least 15 minutes, or at least 30 minutes, or at least 1 hour, or at least 2 hours, or even several hours. As the telecommunication device cannot be contacted during its sleeping time, the listening periods have to be determined by the telecommunication device and must be known to the mobile telecommunication network and/or to the communication partner of the telecommunication device. These determined listening periods are referred to as rendezvous times. The concept of being always reachable has been replaced by a concept of known rendezvous times, thereby obtaining considerable power savings during long sleeping times.

It is a concept of the present invention that the rendezvous times do not depend on the time frame structure of the telecommunication network. In particular, the rendezvous times are independent from the slot / frame / multiframe /superframe / hyperframe structures that are used by the base stations of the telecommunication network. In some embodiments of the present invention, the rendezvous times of the telecommunication device do not depend on the particular base station at which the device is currently registered.

If the telecommunication device cannot be contacted by the mobile telecommunication network, the registration of the telecommunication device in the mobile telecommunication network is cancelled, i.e., an IMSI detach procedure is invoked in case of a GSM network. This causes the telecommunication device to invoke a registration procedure when the next listening period arrives. Registering a telecommunication device in the mobile telecommunication network, such as by performing an IMSI attach in a GSM network, is a relatively power consuming procedure that requires approximately 300 mW over a period of a few seconds.

In some embodiments of the present invention, the mobile telecommunication network does not detach the IMSI of the telecommunication device between two listening periods. This measure avoids a registration procedure, such as an IMSI attach in a GSM network, that would be necessary in a conventional mobile telecommunication network for telecommunication devices that have a long sleeping time.

In some embodiments, the telecommunication device determines the listening periods for all messages to be received from the mobile telecommunication network and responds to them, thereby avoiding cancellation of the registration of the telecommunication device, such as an IMSI detach in a GSM network, due to a missed message while being in sleeping mode.

In some embodiments, the telecommunication device is a tracking or metering device that pushes its data to its communication partner so that there is usually no need for the communication partner to contact the telecommunication device except for configuration or status issues. In some embodiments, there is a listening period directly before or after a sending period.

In some embodiments, the listening period is individually determined for the telecommunication device. In other embodiments, the listening period is determined for a group of telecommunication devices. In this case, each group may, in some embodiments, contain telecommunication devices which are normally located in different geographical regions to minimize the risk that two telecommunication devices that have the same listening periods happen to be located in the same cell.

In some embodiments, the start time of the listening period is determined based on an identifier that is unique for the telecommunication device or the group of telecommunication devices. In some embodiments, the identifier is stored in a memory field of an integrated circuit of the telecommunication device.

In some embodiments, the listening period is aligned to listening time slots within a listening time frame that is repeated continuously. Each telecommunication device or each group of telecommunication devices may have at least one listening time slot for exclusive use within each listening time frame. In GSM networks, the listening time slot may be aligned to GSM TDMA time slots. In such embodiments, the listening time frame may be independent from the frame structure of the underlying mobile telecommunication network. In other words, the listening time frame does not necessarily need to correspond to a GSM TDMA time frame.

If the mobile telecommunication network supports discontinuous reception, the determined listening period in some embodiments covers a paging block of the paging group to which the telecommunication device is assigned. However, during most of the assigned paging blocks, the receiver of a telecommunication device according to the present invention will be turned off.

In some embodiments, the telecommunication device or the group of telecommunication devices may use several listening time slots within each listening time frame, wherein the amount of granted listening time slots depends on an accessibility criterion assigned to the telecommunication device or the group of telecommunication devices. Telecommunication devices which need to be contacted within shorter time intervals have a higher value of the accessibility criterion and thus will have more listening time slots.

In some embodiments, the telecommunication device receives messages from a communication partner, e.g. a computer system or a further telecommunication device collecting data from the telecommunication device that may be a tracking or metering device. Such messages may be transported via SMS, MMS, USSD, or by data sessions. The messages may be used to request the status of the telecommunication device, to configure the telecommunication device, or to request data from the telecommunication device. One of the status requests may be to query the battery status of the telecommunication device or to query the next expected rendezvous time. Configuration commands may comprise defining the next rendezvous time.

Further configuration commands may be related to handle failure states, like how to proceed when the paging request at the rendezvous time has been missed.

One measure in case of a missed rendezvous is to broaden the listening periods and/or to define shorter intervals for the next rendezvous to get in synchronization again. Another measure is to provide alternative rendezvous times, optionally with longer listening periods, if the regular rendezvous times fail.

Communicating with the telecommunication device according to the present invention requires a precise timing to hit the agreed rendezvous times. In some embodiments, a mediation device connected to the mobile telecommunication network buffers incoming requests from a communication partner and forwards them to the telecommunication device as soon as the next rendezvous time occurs. With this approach, the communication partners do not need to manage the exact rendezvous times.

In other embodiments, the functionality of the mediation device is integrated into the mobile telecommunication network. In other embodiments, the communication partner implements the functionality of the mediation device. The communication partner may be a computer system or a further telecommunication device (e.g., a smart phone) with an application that manages the rendezvous timing.

In some embodiments, the periodicity of the rendezvous times is adapted based on the battery level of the telecommunication device. The modified timing is communicated via status commands when transferring data from the telecommunication device to the communication partner.

In some embodiments, the rendezvous times follow a periodic scheme. Other embodiments realize a flexible agreement between the communication partner and the telecommunication device. This concept allows further considerable power savings as unnecessary rendezvous between the devices can be avoided.

In some embodiments, the telecommunication device expects an incoming message during each listening period, wherein a listening period without any incoming message is interpreted as a loss of synchronization between the telecommunication device and the communication partner. In such a scenario, the telecommunication device may enter a recovery mode. In the recovery mode, one or more of the following measures may be taken: (1) The telecommunication device actively sends a message to the communication partner to negotiate a new timing for listening periods and/or other operation parameters, (2) the time determining section of the telecommunication device re-synchronizes its time with the external time reference, and/or (3) the telecommunication sends an error message to a fallback entity. The recovery mode may also be used for performing an initial configuration of the telecommunication device.

In some embodiments, the telecommunication device enters a sleeping mode before waiting for the end of the current listening period upon receipt of an "empty" message ("sleep message").

In some embodiments, the telecommunication section or parts thereof are turned off directly after receipt an incoming message during the listening period, even if the listening period has not been completed yet. In other embodiments, the telecommunication section is at least partly turned off within a predetermined time from complete receipt of the message.

Some embodiments of the present invention require a time signal that can be retrieved by both the telecommunication device and its communication partners to ensure that agreed rendezvous times can be met. This may be a time signal that does not depend on individual base stations of the mobile telecommunication network. A rendezvous time based on TDMA frame counting, or another time reference related to a base station, may not necessarily be in synchronization with devices outside the range of the base station communicating with the telecommunication device.

In some embodiments, the current time information is obtained from time signals transmitted from a satellite navigation system, e.g., the Global Positioning System (GPS), the Globalnaya Navigatsionnaya Sputnikovaya Sistema (GLONASS), the Galileo positioning system (Galileo), or the Compass navigation system (Compass). In another embodiment, the current time information is obtained from time signals transmitted from radio stations, like DCF77. In a further embodiment, the current time information is obtained from pulses on a power line. In yet another embodiment, the time information is transmitted by the timing of, or as data contained in, messages sent from the mobile telecommunication network.

The invention is generally applicable to all kinds of mobile telecommunication networks (e.g., mobile phone cellular networks or satellite phone networks) that use paging and location update procedures. The mobile phone cellular networks comprise Second Generation (2G) networks like the Global System for Mobile Communications (GSM), including its supplements General Packet Radio Service (GPRS) and Enhanced Data rates for GSM Evolution (EDGE), or Interim Standard 95 (IS-95, also known under its brand name cdmaOne), furthermore Third Generation (3G) networks like the Universal Mobile Telecommunications System (UMTS), including its supplements High Speed Downlink Packet Access (HSDPA) and High-Speed Uplink Packet Access (HSUPA), or CDMA2000, Long Term Evolution (LTE), Worldwide Interoperability for Microwave Access (WiMAX). It also covers Fourth Generation (4G) networks like Long Term Evolution Advanced (LTE-Advanced) and the latest release of Worldwide Interoperability for Microwave Access (WiMAX). The satellite phone networks comprise Globalstar, Inmarsat, Iridium, MSAT, SkyTerra, Terrestar, and Thuraya.

In some embodiments of the present invention, an integrated circuit or a module of integrated circuits comprises a time determining section directly obtaining current time information from an external time reference.

According to some embodiments of the invention, the inventive method is implemented in at least one of an integrated circuit or a module that comprises integrated circuits or a telecommunication device. In an embodiment, the integrated circuit is a power management controller, which comprises a function for determining the desired listening period. The power management controller comprises an interface to a time determining section providing the current time information and an interface to a telecommunication section to turn off the telecommunication section at least partially outside the listening period if there is no active use of the telecommunication device. In another embodiment, the integrated circuit comprises the functionality of the power management controller and the baseband controller for telecommunication purposes and a navigation baseband controller to obtain the current time information derived from the signal of a satellite navigation system. In another embodiment, the radio frequency signal processors for both telecommunication and navigation signals are added to the previously described integrated circuit.

The division of the respective functionalities between various integrated circuits and modules is not restricted to the described embodiments as long as the chosen integrated circuit design comprises the described methods or parts thereof.

The invention also comprises a machine-readable medium having suitable program instructions to realize the inventive method, for example, on a general-purpose computer or in a programmable integrated circuit. The machine-readable medium may be any kind of physical or non-physical data carrier like, for example, a computer disk or a CD-ROM or a semiconductor memory or a signal transmitted over a computer network.

### BRIEF DESCRIPTION OF THE DRAWINGS

Further features, objects and advantages of the invention will become apparent from the following detailed description, in connection with the annexed schematic drawings, in which:
Fig. 1 shows a block diagram of a telecommunication device according to an embodiment of the present invention,
Fig. 2 shows telecommunication devices and a mobile telecommunication network,
Fig. 3 shows components of a time determining section,
Fig. 4 shows embodiments of integrated circuits and modules thereof,
Fig. 5 shows the power state, over time, of a telecommunication section of a conventional telecommunication device in a discontinuous reception mode when communicating with a base station,
Fig. 6 shows the power state, over time, of the telecommunication section of the conventional telecommunication device in the discontinuous reception mode when communicating with the base station, and it shows the difference when communicating with another base station,
Fig. 7 shows the optimized power state, over time, of a telecommunication section of a telecommunication device according to an embodiment of the present invention,
Fig. 8 shows the optimized power state, over time, of the telecommunication section of the telecommunication device according to another embodiment, where the telecommunication section is at least partially turned off as soon as a message has been completely received,
Fig. 9 shows the optimized power state, over time, of the telecommunication section of the telecommunication device according to an embodiment of the present invention if no message arrives during a listening period,
Fig. 10 shows the optimized power state, over time, of the telecommunication section of the telecommunication device according to an embodiment of the present invention if a message is expected in each listening period for the case that the message does not arrive,
Fig. 11 shows a telecommunication device communicating with a base station of a mobile telecommunication network, and another base station in the vicinity of the telecommunication device, and
Fig. 12 shows the telecommunication device according to an embodiment of the present invention communicating with a computer system or a further telecommunication device.

### DETAILED DESCRIPTION OF EMBODIMENTS OF THE INVENTION

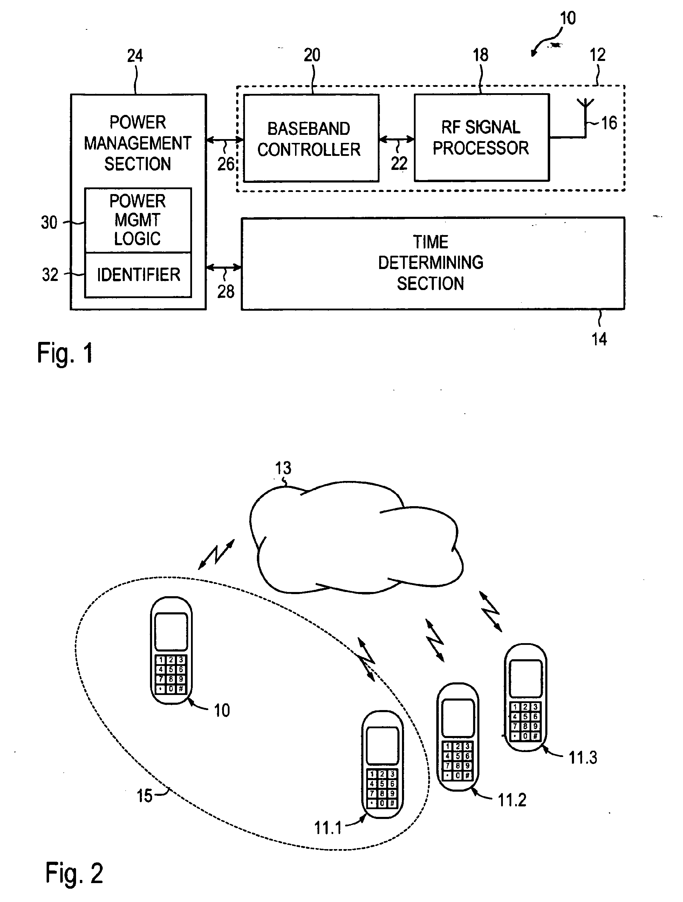

Fig. 1 shows a telecommunication device 10, comprising a telecommunication section 12, a time determining section 14, and a power management section 24. The power management section 24 obtains current time information from the time determining section 14 via an interface 28. The power management section 24 further controls the telecommunication section 12 via an interface 26. When the current time obtained from the time determining section 14 matches a determined listening period, the power management section turns on the telecommunication section 12 at least partially to listen for messages from a mobile telecommunication network 13 (Fig 2). If the telecommunication device 10 is in an idle mode, the telecommunication section 12 is at least partially turned off outside determined listening periods.

The telecommunication section 12 comprises an antenna system 16, an RF signal processor 18, and a baseband controller 20. The RF signal processor 18 is controlled by the baseband controller 20 via an interface 22.

The power management section 24 contains a logic unit 30 to determine the start time of the listening period based on an identifier 32 that is stored in, or accessible to, the power management section 24. The value of the identifier 32 determines an exclusive listening period. If other telecommunication devices have a different identifier 32, they will have different listening periods. Telecommunication devices sharing the same identifier 32 will share the same listening periods.

Fig. 2 shows the telecommunication device 10 and the mobile telecommunication network 13. The mobile telecommunication network 13 communicates with the telecommunication device 10 and with a plurality of other telecommunication devices 11.1, 11.2, 11.3, in the following referred to as telecommunication devices 11.x. In some embodiments, the listening period is exclusive for each telecommunication device 10. In other embodiments, the listening period is exclusive for a group 15 of telecommunication devices 10 and 11.1.

In some embodiments, the listening periods are aligned to discrete time intervals, namely listening time slots. The slotting of listening periods maximizes the amount of available non-overlapping listening periods per given time interval. A certain number of listening time slots are arranged in a listening time frame. The telecommunication device 10 or the group 15 of telecommunication devices assigned to a certain listening time slot can be contacted during its assigned listening time slot in the cycle of the listening time frame.

In some embodiments, the mobile telecommunication network 13 distinguishes telecommunication devices 10 according to the present invention from conventional telecommunication devices. The mobile telecommunication network 13 will indicate different time slots being available for paging requests by these two types of telecommunication devices. In such embodiments, all paging requests can be handled in a sequence even if both types of telecommunication devices are located in the same cell, thereby averaging the signaling load.

According to another embodiment, several listening time slots within each listening time frame are assigned to a telecommunication device, thus providing higher accessibility of the telecommunication device 10 and thereby shortening the sleeping time between two listening periods. The higher the assigned accessibility, the higher the number of listening time slots assigned to the telecommunication device 10. The listening time frames do not necessarily depend on the frame structure of the underlying mobile telecommunication network 13.

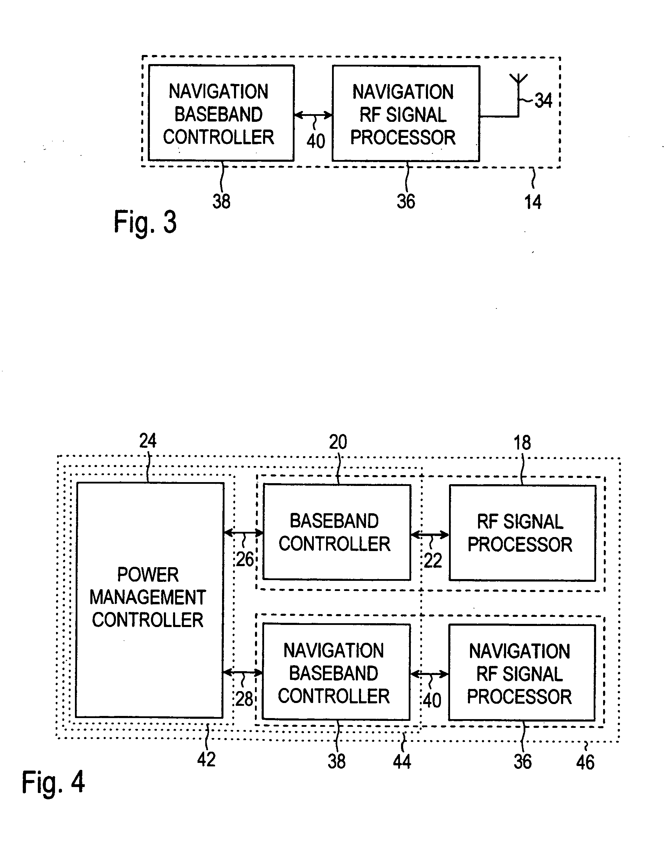

Fig. 3 shows the details of an embodiment of the time determining section 14, which obtains the current time information from a satellite navigation system. The time determining section 14 comprises an antenna system 34, a navigation RF signal processor 36, and a navigation baseband controller 38. The navigation RF signal processor 36 is controlled by the navigation baseband controller 38 via an interface 40. The navigation baseband controller 38 processes the information received from the satellite navigation system and generates data including the current time. The time determining section 14 further comprises a local timer - e.g., a quartz oscillator - that is synchronized with the external time reference periodically or in response to certain events. When the time determining section 14 is requested to output the current time, it will normally output the current time as given by the local timer, which is in turn synchronized to the external time source.

The time determining section 14 can also be based on another technique that obtains current time information directly from a time reference that is external to both the telecommunication device 10 and the mobile telecommunication network 13. Any external time reference may be used, as long as it provides the same absolute timing for both the telecommunication device 10 and the communication partner of the telecommunication device 10. In many embodiments, the time determining section 14 only sporadically obtains the current time information directly from the external time reference, and it uses this time information in order to synchronize the local timer with the external time reference.

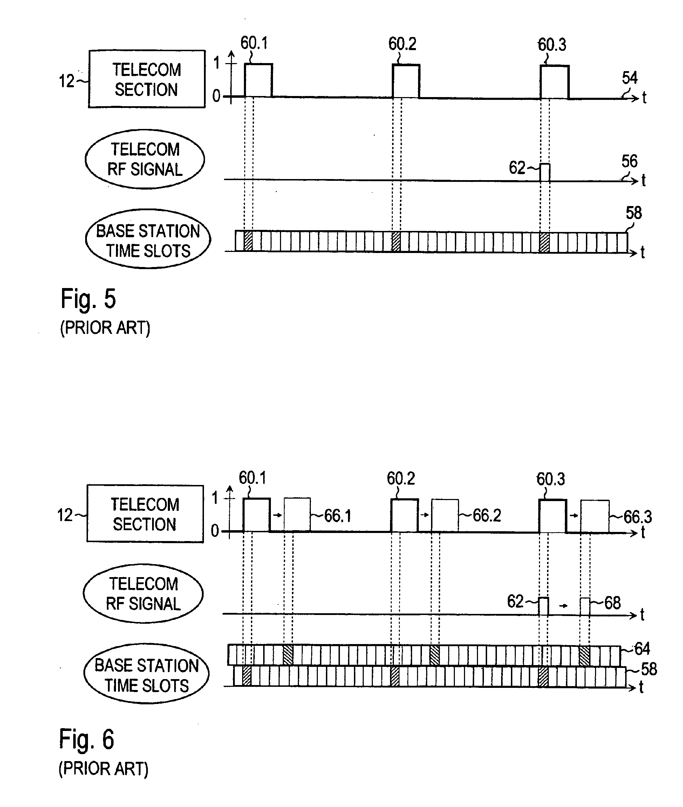

Fig. 5 shows an example of the prior art: A conventional telecommunication device comprising the telecommunication section 12 is capable of discontinuous reception. The conventional telecommunication device is assigned to a certain paging group. Messages to the conventional telecommunication device are only sent during time slots which are specific for the assigned paging group.

At least the receiver of the telecommunication section of the conventional telecommunication device is periodically turned on to listen for messages sent from the mobile telecommunication network 13. Curve 54 shows the periods 60.1, 60.2, 60.3 (in the following referred to as 60.x) during which the receiver is on. However, the mobile telecommunication network 13 will not necessarily send a message to the conventional telecommunication device during each listening period 60.x. In GSM networks, messages are sent in case of a location update or a paging request that occurs in response to an incoming call or data session or when an SMS or MMS arrives. In our example, a message 62 is sent during the listening period 60.3 only.

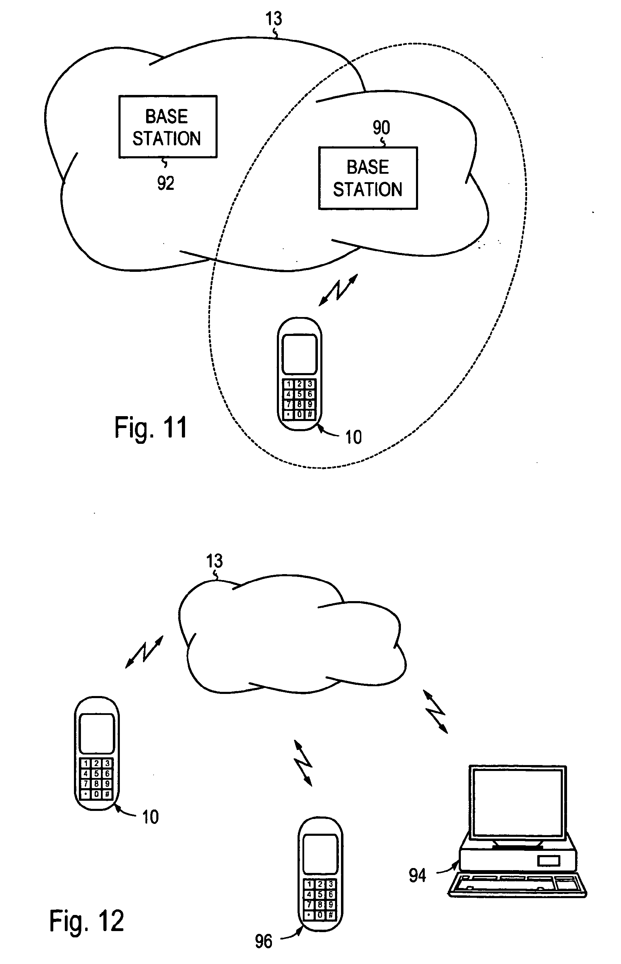

Fig. 11 shows the telecommunication device 10 communicating with a base station 90. When the telecommunication device 10 moves towards another base station 92, a hand-over to the other base station 92 occurs.

Fig. 6 shows the effect on the listening period when the conventional telecommunication device moves from the base station 90 to the other base station 92. As the timing of the time slots depends on the current base station, the absolute timing of the listening periods is shifted. The paging group specific time slots are the same, but the time slots and frames are organized and counted independently by each base station. Line 58 shows the time slots of the base station 90, and line 64 shows the time slots of the other base station 92.

Due to the shift in timing, the listening periods 60.x are shifted to 66.x to receive message 68 from the other base station 92. As the timing is based on the time frame structure provided by a base station, the rendezvous times will change as soon as the telecommunication device changes its location to another base station. Without further knowledge of network specific parameters, the communication partners will not be able to determine the correct listening period of the telecommunication device 10.

Fig. 12 shows the telecommunication device 10 communicating with a computer system 94 or another telecommunication device 96 via the mobile telecommunication network 13. The telecommunication device 10 may be a tracking or metering device collecting data to be transferred to the computer system 94 or the other telecommunication device 96. In some embodiments, the mobile telecommunication network 13 is aware of the rendezvous times during which the telecommunication device 10 is listening for messages from communication partners, thereby buffering the messages until the next rendezvous time. In other embodiments, the computer system 94 and/or the other telecommunication device 96 are aware of the rendezvous times and send their messages during the listening period.

As the technique of time slot and frame counting does not guarantee an absolute rendezvous timing, the present invention follows another approach than used in conventional discontinuous reception:

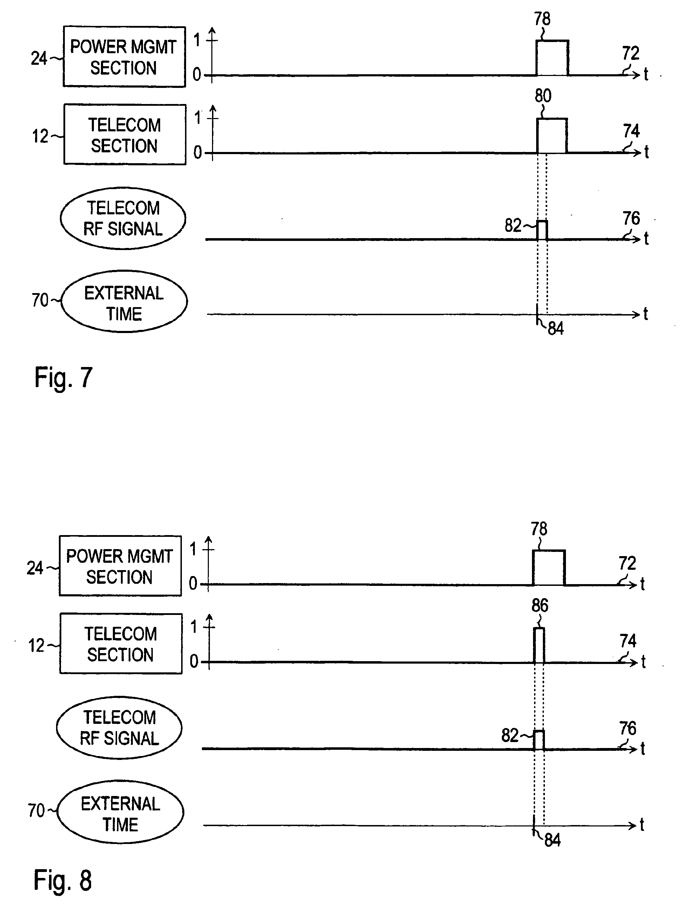

Fig. 7 shows a scenario where a calculated listening period 78 is determined by the power management section 24 of the telecommunication device 10. The telecommunication section 12 is at least partially turned on during an actual listening period 80 that is identical to the calculated listening period 78. The mobile telecommunication network 13 and/or the communication partner are aware of the calculated listening period 78. The mobile telecommunication network 13 sends a message 82 that exactly hits the beginning of the calculated listening period 78. This approach requires an external time reference 70 that provides current time information that is the same for all involved communication parties and is independent from the base station. As soon as the current time information matches the determined start time 84 of the calculated listening period 78, at least the receiver of the telecommunication section 12 is turned on. The receives is turned off again after the end of the calculated listening period 78.

Fig. 8 shows an embodiment where the telecommunication section 12 is turned off before the end of the calculated listening period 78, but after the incoming message 82 has been completely received, as shown in the actual listening period 86.

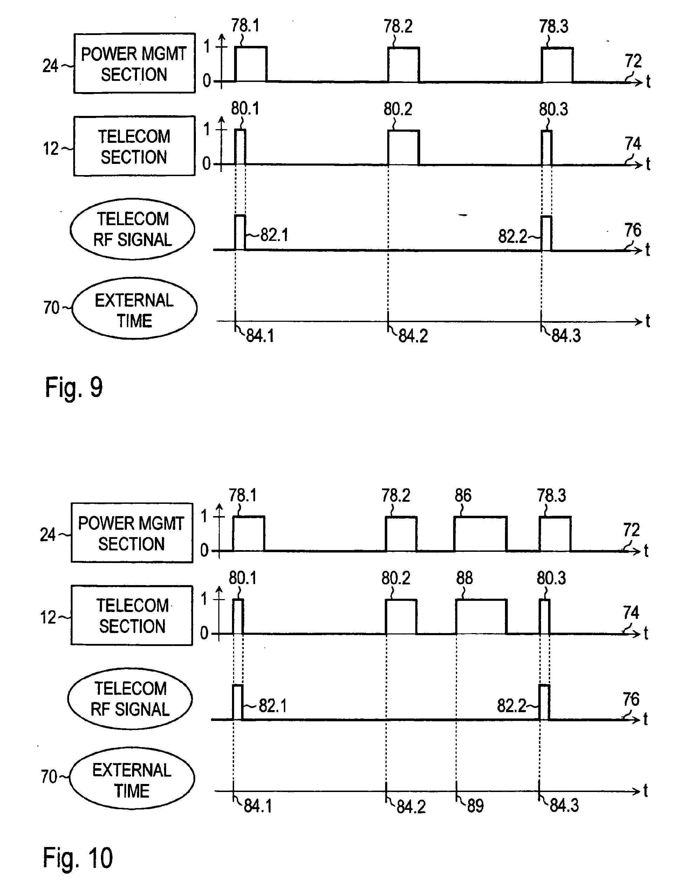

Fig. 9 shows an embodiment where the power management section 24 determines the calculated listening periods 78.1, 78.2, and 78.3, in the following referred to as 78.x. The telecommunication section 12 is at least partially turned on as soon as the start times 84.1, 84.2, 84.3 of the calculated listening periods occur. The telecommunication section 12 is turned off again as soon as the incoming messages 82.1 and 82.2 have been completely received, as shown in the actual listening periods 80.1 and 80.3. As there is no incoming message at the start time 84.2, the actual listening period 80.2 fully covers the calculated listening period 78.2 in order to wait for receipt of a message.

Fig. 10 is based on a scenario where the telecommunication device 10 expects an incoming message in each listening period. The power management section 24 determines the start time 84.2 of a calculated listening period 78.2. If there is no incoming message during the calculated listening period 78.2, the telecommunication section 12 is at least partially turned on during the actual listening period 80.2 which is identical to the calculated listening period 78.2. As an incoming message is mandatory for each listening period in this scenario, the telecommunication device 10 according to this embodiment assumes that there has been a synchronization problem with the communication partner. In this case, the telecommunication device will provide additional listening periods; a measure that is also known to the communication partners. There is at least one further calculated listening period 86 at start time 89. The telecommunication section 12 is at least partially turned on during the actual listening period 88 to have an additional chance to receive a message. As no message arrives, the telecommunication section 12 is at least partially turned on during the full length of the calculated listening period 86. However, in the next regular listening period with start time 84.3, message 82.2 arrives.

One further benefit of directly communicating with a time reference that is external to the telecommunication device 10 and to the mobile telecommunication network 13 or to the communication partners of the telecommunication device 10 is that the time frame structure of the underlying network does not need to be fully analyzed to determine the appropriate listening period. In GSM networks, a GSM TDMA Time Slot, a TDMA Time Frame, and a Multiframe can be decoded from the Sync Bursts. However, decoding the appropriate Superframe or Hyperframe requires a more complex handling which can be avoided if another type of current time information is available.

According to an embodiment of the invention, the method or several steps thereof are implemented in an integrated circuit or a module comprising several integrated circuits. Fig. 4 shows an integrated circuit 42, which comprises the functionality of the power management section 24 as shown in Fig. 2. The power management logic 30 of the power management section 24 determines the listening period based on the identifier 32 and uses the current time information provided by the navigation baseband controller 38 as time reference. In other embodiments, the integrated circuit 44 combines the functionality of the baseband controller 20 and the navigation baseband controller 38 with the power management section 24. In other embodiments, the integrated circuit 46 adds the functionality of the RF signal processor 18 and the navigation RF signal processor 36 to the components of the integrated circuit 44.

In some embodiments, the external time reference is different from a signal of a satellite navigation system. For example, the external time reference could be a terrestrial time signal, like DCF-77, or a signal on a power line, or the timing of a message received from the mobile telecommunication network 13, or the content of a message received from the mobile telecommunication network 13. In such cases, the integrated circuits 44 and 46 comprise the required time determining functionality. In embodiments that use messages received from the mobile telecommunication network 13 as an external time reference, these messages are understood to be independent of a TDMA time frame structure (comprising slots, frames, multiframes, superframes, hyperframes, etc.) or any other timing structure defined in the applicable mobile telecommunication standards.

It is understood that embodiments in which the current time information is obtained from a satellite navigation system or any other time reference do not need to constantly receive and process incoming time reference signals. Rather, such embodiments will usually comprise an internal timer which is driven by a reasonably accurate oscillator and is only synchronized periodically with the absolute time information from the satellite navigation system or the other external time reference.

In some embodiments, the mobile telecommunication network 13 is a GSM network, optionally supporting GPRS or EDGE, wherein the telecommunication device 10 comprises a mobile station.

In other embodiments, the mobile telecommunication network 13 is a UMTS network optionally supporting HSDPA or HSUPA, or the mobile telecommunication network 13 is an LTE or LTE Advanced network, or the mobile telecommunication network 13 is a WiMAX network, wherein the telecommunication device 10 comprises a user equipment.

In some embodiments, the time determining section 14 comprises a GPS or GALILEO receiver, and wherein the current time as determined by the time determining section 14 is the GPS time or the GALILEO time.

In some embodiments, the telecommunication device 10 is a tracking or metering device.

The particulars contained in the above description of sample embodiments should not be construed as limitations of the scope of the invention, but rather as exemplifications of some embodiments thereof. Many variations are possible and are immediately apparent to the person skilled in the arts. In particular, this concerns variations that comprise a combination of features of the individual embodiments disclosed in the present specification. Accordingly, the scope of the invention should be determined not by the embodiments illustrated, but by the appended claims.

## Claims

1. A method executed on a telecommunication device (10) for reducing power consumption, wherein
the telecommunication device (10) comprises a mobile station in a GSM network or a user equipment in a UMTS network, the telecommunication device (10) comprising:
a telecommunication section (12) communicating with a mobile telecommunication network (13) being a GSM network or a UMTS network, and
a time determining section (14) that directly communicates with a time reference (70) that is independent from a time frame structure used in the mobile telecommunication network (13),
the method comprising:
turning on the telecommunication section (12) at least partially when the current time as determined by the time determining section (14) matches a start time (84) of a listening period (78),
listening for a message (82) sent to the telecommunication device (10), and
turning off the telecommunication section (12) at least partially by the end of the listening period (78) at the latest.

2. The method of claim 1, wherein
the telecommunication device (10) comprises an identifier (32), and
wherein
the start time (84) of the listening period (78) is determined by the identifier (32).

3. The method of claims 1 or 2, the method being executed on a plurality of telecommunication devices, wherein
the start time (84) of the listening period (78) is specific for a single telecommunication device (10) or a group (15) of telecommunication devices from the plurality of telecommunication devices.

4. The method of any one of claims 1 - 3, wherein
the mobile telecommunication network (13) supports discontinuous reception and assigns the telecommunication device (10) to a paging group, wherein
the listening period (78) covers a paging block of the assigned paging group.

5. The method of any one of claims 1 - 4, wherein
a sleeping time between two consecutive listening periods (78) is at least 1 minute or at least 5 minutes.

6. The method of any one of claims 1 - 5, wherein
the telecommunication device (10) is operated in a telecommunication network (13) that cancels the registration of the telecommunication device (10) if the telecommunication device (10) cannot be contacted,
the method further comprising:
determining all listening periods (78) that are required for keeping the telecommunication device (10) registered in the mobile telecommunication network (13), and
listening for a message (82) during all determined listening periods (78).

7. The method of any one of claims 1 - 6, wherein
the telecommunication section (12) is at least partially turned off as soon as the message (82) has been completely received.

8. The method of any one of claims 1 - 7, wherein
the telecommunication device (10) expects an incoming message (82) in each listening period (78),
the method further comprising:
if the telecommunication device (10) does not receive a message in a listening period (78.2), determining an additional listening period (86) before the next regular listening period (78.3).

9. A method executed on a system (94, 96) for communicating with a telecommunication device (10) in a mobile telecommunication network (13) being a GSM network or a UMTS network, wherein each of the system (94, 96) and the telecommunication device (10) comprises a mobile station in said GSM network or a user equipment in said UMTS network,
the system (94, 96) comprising:
a time determining section that directly communicates with a time reference (70) that is independent from a time frame structure used in the mobile telecommunication network (13),
the method comprising:
buffering a request to be communicated to the telecommunication device (10),
selecting a communication time (84) that is specific for the telecommunication device (10) or a group (15) of telecommunication devices comprising the telecommunication device (10), and
sending the buffered request to the telecommunication device (10) when the current time as determined by the time determining section (14) matches the selected communication time (84).

10. A method executed in a mobile telecommunication network (13) for communicating with a telecommunication device (10) comprising a mobile station in a GSM network or a user equipment in a UMTS network, wherein
the mobile telecommunication network (13) is a GSM network or a UMTS network, comprising:
a time determining section that directly communicates with a time reference (70) that is independent from a time frame structure used in the mobile telecommunication network (13),
the method comprising:
buffering an incoming message (82) received from a communication partner of the telecommunication device (10),
selecting a communication time (84) that is specific for the telecommunication device (10) or a group (15) of telecommunication devices comprising the telecommunication device (10),
sending the buffered message (82) to the telecommunication device (10) when the current time as determined by the time determining section (14) matches the selected communication time (84).

11. The method of any one of claims 1 - 10, wherein
the time reference is external to both the telecommunication device (10) and the mobile telecommunication network (13).

12. The method of any one of claims 1 - 11, wherein
the time determining section (14) obtains time information from radio frequency signals received from a satellite navigation system.

13. A set (42, 44, 46) of one or more integrated circuits, comprising:
a telecommunication section (12) adapted for communicating with a mobile telecommunication network (13) being a GSM network or a UMTS network,
a time determining section (14) adapted for determining a current time based on time information from a satellite navigation system,
a power management section (24) adapted for turning on the telecommunication section (12) at least partially when the current time as determined by the time determining section matches a start time (84) of a listening period (78) of the telecommunication section (12), wherein
the power management section (24) is further adapted for turning off the telecommunication section (12) at least partially by the end of the listening period (78) at the latest, and wherein
the set of one or more integrated circuits is configured to perform the method of any one of claims 1 - 8.

14. A telecommunication device (10) comprising a mobile station in a GSM network or a user equipment in a UMTS network, comprising the set (42, 44, 46) of one or more integrated circuits of claim 13.

15. The telecommunication device (10) of claim 14, wherein
the telecommunication device (10) comprises a tracking or metering device.

16. A machine-readable medium that comprises a plurality of program instructions, wherein the program instructions are adapted for causing at least one processor to perform the method of any one of claims 1 - 12.

## Patentansprüche

1. Verfahren zur Reduzierung des Energieverbrauchs, das durch eine Telekommunikationsvorrichtung (10) ausgeführt wird, bei dem
die Telekommunikationsvorrichtung (10) eine Mobilstation in einem GSM-Netz oder eine Benutzereinrichtung in einem UMTS-Netz umfasst, wobei die Telekommunikationsvorrichtung (10) aufweist:
einen Telekommunikationsteil (12), der mit einem Mobiltelekommunikationsnetz (13), das ein GSM-Netz oder ein UMTS-Netz ist, kommuniziert, und
einen Zeitbestimmungsteil (14), der unmittelbar mit einer Zeitreferenz (70) kommuniziert, die unabhängig von einer in dem Mobiltelekommunikationsnetz (13) verwendeten Zeitrahmenstruktur ist,
wobei das Verfahren aufweist:
zumindest teilweises Einschalten des Telekommunikationsteils (12), wenn die gegenwärtige Zeit, wie sie durch den Zeitbestimmungsteil (14) bestimmt wird, zu einer Startzeit (84) einer Lausch-Zeitdauer (78) passt,
Lauschen nach einer Nachricht (82), die an die Telekommunikationsvorrichtung (10) gesendet wird, und
zumindest teilweises Ausschalten der Telekommunikationsvorrichtung (12) spätestens am Ende der Lausch-Zeitdauer (78).

2. Verfahren nach Anspruch 1, bei dem
die Telekommunikationsvorrichtung (10) einen Identifikator (32) aufweist, und bei dem
die Startzeit (84) der Lausch-Zeitdauer (78) durch den Identifikator (32) bestimmt wird.

3. Verfahren nach Anspruch 1 oder Anspruch 2, wobei das Verfahren durch eine Mehrzahl von Telekommunikationsvorrichtungen ausgeführt wird, wobei
die Startzeit (84) der Lausch-Zeitdauer (78) spezifisch für eine einzige Telekommunikationsvorrichtung (10) oder eine Gruppe (15) von Telekommunikationsvorrichtungen aus der Mehrzahl von Telekommunikationsvorrichtungen ist.

4. Verfahren nach einem der Ansprüche 1 - 3, bei dem
das Mobiltelekommunikationsnetz (13) einen diskontinuierlichen Empfang unterstützt und die Telekommunikationsvorrichtung (10) einer Rufgruppe zuordnet, wobei
die Lausch-Zeitdauer (78) einen Rufblock der zugeordneten Rufgruppe abdeckt.

5. Verfahren nach einem der Ansprüche 1 - 4, bei dem
eine Ruhezeit zwischen zwei aufeinanderfolgenden Lausch-Zeitdauern (78) mindestens eine Minute oder mindestens fünf Minuten beträgt.

6. Verfahren nach einem der Ansprüche 1 - 5, bei dem
die Telekommunikationsvorrichtung (10) in einem Telekommunikationsnetz (13) betrieben wird, das die Registrierung der Telekommunikationsvorrichtung (10) löscht, wenn die Telekommunikationsvorrichtung (10) nicht kontaktiert werden kann,
wobei das Verfahren ferner aufweist:
Bestimmen aller Lausch-Zeitdauern (78), die erforderlich sind, um die Telekommunikationsvorrichtung (10) in dem Mobiltelekommunikationsnetz (13) registriert zu halten, und
Lauschen nach einer Nachricht (82) während aller bestimmten Lausch-Zeitdauern (78).

7. Verfahren nach einem der Ansprüche 1 - 6, bei dem
der Telekommunikationsteil (12) zumindest teilweise ausgeschaltet wird, sobald die Nachricht (82) vollständig empfangen worden ist.

8. Verfahren nach einem der Ansprüche 1 - 7, bei dem
die Telekommunikationsvorrichtung (10) in jeder Lausch-Zeitdauer (78) eine eingehende Nachricht (82) erwartet,
wobei das Verfahren ferner aufweist:
wenn die Telekommunikationsvorrichtung (10) in einer Lausch-Zeitdauer (78.2) keine Nachricht erhält, wird eine zusätzliche Lausch-Zeitdauer (86) vor der nächsten normalen Lausch-Zeitdauer (78.3) bestimmt.

9. Verfahren, das in einem System (94, 96) ausgeführt wird, um mit einer Telekommunikationsvorrichtung (10) in einem Mobiltelekommunikationsnetz (13), das ein GSM-Netz oder ein UMTS-Netz ist, zu kommunizieren, wobei sowohl das System (94, 96) als auch die Telekommunikationsvorrichtung (10) eine Mobilstation in dem GSM-Netz oder eine Benutzereinrichtung in dem UMTS-Netz umfassen,
wobei das System (94, 96) aufweist:
einen Zeitbestimmungsteil, der direkt mit einer Zeitreferenz (70) kommuniziert, welche unabhängig von einer in dem Mobiltelekommunikationsnetz (13) verwendeten Zeitrahmenstruktur ist,
wobei das Verfahren aufweist:
Puffern einer Anforderung, die an die Telekommunikationsvorrichtung (10) kommuniziert werden soll,
Auswählen einer Kommunikationszeit (84), die spezifisch für die Telekommunikationsvorrichtung (10) oder eine Gruppe (15) von Telekommunikationsvorrichtungen, welche die Telekommunikationsvorrichtung (10) enthält, ist, und
Senden der gepufferten Anforderung an die Telekommunikationsvorrichtung (10), wenn die gegenwärtige Zeit, wie sie von dem Zeitbestimmungsteil (14) bestimmt wird, zu der ausgewählten Kommunikationszeit (84) passt.

10. Verfahren, das in einem Mobiltelekommunikationsnetz (13) zum Kommunizieren mit einer Telekommunikationsvorrichtung (10), die eine Mobilstation in einem GSM-Netz oder eine Benutzereinrichtung in einem UMTS-Netz umfasst, ausgeführt wird, wobei
das Mobiltelekommunikationsnetz (13) ein GSM-Netz oder ein UMTS-Netz ist, das aufweist:
einen Zeitbestimmungsteil, der unmittelbar mit einer Zeitreferenz (70) kommuniziert, welche unabhängig von einer in dem Mobiltelekommunikationsnetz (13) verwendeten Zeitrahmenstruktur ist,
wobei das Verfahren aufweist:
Puffern einer eingehenden Nachricht (82), die von einem Kommunikationspartner der Telekommunikationsvorrichtung (10) stammend empfangen wird,
Auswählen einer Kommunikationszeit (84), die spezifisch für die Telekommunikationsvorrichtung (10) oder eine Gruppe (15) von Telekommunikationsvorrichtungen, die die Telekommunikationsvorrichtung (10) enthält, ist,
Senden der gepufferten Nachricht (82) an die Telekommunikationsvorrichtung (10), wenn die gegenwärtige Zeit, wie sie durch den Zeitbestimmungsteil (14) bestimmt wird, zu der ausgewählten Kommunikationszeit (84) passt.

11. Verfahren nach einem der Ansprüche 1 - 10, bei dem
die Zeitreferenz sowohl extern zu der Telekommunikationsvorrichtung (10) als auch extern zu dem Mobiltelekommunikationsnetz (13) ist.

12. Verfahren nach einem der Ansprüche 1 - 11, bei dem
der Zeitbestimmungsteil (14) Zeitinformationen von Funksignalen erhält, die von einem Satellitennavigationssystem stammend empfangen werden.

13. Eine Zusammenstellung (42, 44, 46) von einer oder mehreren integrierten Schaltungen, aufweisend:
einen Telekommunikationsteil (12), der dazu eingerichtet ist, mit einem Mobiltelekommunikationsnetz (13), das ein GSM-Netz oder ein UMTS-Netz ist, zu kommunizieren,
einen Zeitbestimmungsteil (14), der dazu eingerichtet ist, beruhend auf Zeitinformationen von einem Satellitennavigationssystem eine gegenwärtige Zeit zu bestimmen,
einen Stromversorgungsteil (24), der dazu eingerichtet ist, den Telekommunikationsteil (12) zumindest teilweise einzuschalten, wenn die gegenwärtige Zeit, wie sie von dem Zeitbestimmungsteil bestimmt wird, zu einer Startzeit (84) einer Lausch-Zeitdauer (78) des Telekommunikationsteils (12) passt, wobei
der Stromversorgungsteil (24) ferner dazu eingerichtet ist, den Telekommunikationsteil (12) spätestens zum Ende der Lausch-Zeitdauer (78) zumindest teilweise auszuschalten, und wobei
die Zusammenstellung von einer oder mehreren integrierten Schaltungen dazu eingerichtet ist, das Verfahren nach einem der Ansprüche 1 - 8 auszuführen.

14. Telekommunikationsvorrichtung (10), die eine Mobilstation in einem GSM-Netz oder eine Benutzereinrichtung in einem UMTS-Netz umfasst, wobei die Telekommunikationsvorrichtung (10) die Zusammenstellung (42, 44, 46) der einen oder der mehreren integrierten Schaltungen nach Anspruch 13 aufweist.

15. Telekommunikationsvorrichtung (10) nach Anspruch 14, bei der
die Telekommunikationsvorrichtung (10) eine Nachverfolgungs- oder Messeinrichtung aufweist.

16. Maschinenlesbares Medium, das eine Vielzahl von Programmbefehlen aufweist, wobei die Programmbefehle dazu eingerichtet sind, zumindest einen Prozessor dazu zu veranlassen, das Verfahren nach einem der Ansprüche 1 - 12 auszuführen.

## Revendications

1. Procédé exécuté sur un appareil de télécommunication (10) en vue de réduire la consommation d'énergie, dans lequel
l'appareil de télécommunication (10) comprend une station mobile dans un réseau de type GSM ou un équipement utilisateur dans un réseau de type UMTS, l'appareil de télécommunication (10) comprenant :
une section de télécommunication (12) communiquant avec un réseau de télécommunication mobile (13) représentant un réseau de type GSM ou un réseau de type UMTS, et
une section de détermination du temps (14) qui communique directement avec une référence de temps (70) indépendante d'une structure de séquence de temps utilisée dans le réseau de télécommunication mobile (13),
le procédé comprenant :
la mise en service au moins partielle de la section de télécommunication (12) lorsque le temps actuel, déterminé par la section de détermination de temps (14), correspond à un instant de début (84) d'une période d'écoute (78),
l'écoute d'un message (82) envoyé à l'appareil de télécommunication (10), et
la mise hors service au moins partielle de la section de télécommunication (12) au plus tard à la fin de la période d'écoute (78).

2. Procédé selon la revendication 1, dans lequel
l'appareil de télécommunication (10) comprend un identificateur (32), et dans lequel
l'instant de début (84) de la période d'écoute (78) est déterminé par l'identificateur (32).

3. Procédé selon les revendications 1 ou 2, le procédé étant exécuté sur une pluralité d'appareils de télécommunication, dans lequel
l'instant de début (84) de la période d'écoute (78) est spécifique à un appareil de télécommunication (10) ou à un groupe (15) d'appareils de télécommunication appartenant à la pluralité d'appareils de télécommunication.

4. Procédé selon l'une quelconque des revendications 1 à 3, dans lequel
le réseau de télécommunication mobile (13) prend en charge une réception discontinue et assigne l'appareil de télécommunication (10) à un groupe de recherches, dans lequel
la période d'écoute (78) couvre un bloc de recherches du groupe de recherches assigné.

5. Procédé selon l'une quelconque des revendications 1 à 4, dans lequel
le temps de mise en sommeil entre deux périodes d'écoute (78) consécutives est d'au moins 1 minute ou d'au moins 5 minutes.

6. Procédé selon l'une quelconque des revendications 1 à 5, dans lequel
l'appareil de télécommunication (10) est mis en oeuvre dans un réseau de télécommunication (13) qui annule l'enregistrement de l'appareil de télécommunication (10) si l'appareil de télécommunication (10) ne peut pas être contacté,
le procédé comprenant en outre :
la détermination de la totalité des périodes d'écoute (78) qui sont nécessaires pour conserver l'enregistrement de l'appareil de télécommunication (10) dans le réseau de télécommunication mobiles (13), et
l'écoute d'un message (82) pendant tous les périodes d'écoute (78) déterminées.

7. Procédé selon l'une quelconque des revendications 1 à 6, dans lequel
la section de télécommunication (12) est au moins partiellement mise hors service dès que le message (82) a été entièrement reçu.

8. Procédé selon l'une quelconque des revendications 1 à 7, dans lequel
l'appareil de télécommunication (10) attend un message entrant (82) dans chaque période d'écoute (78),
le procédé comprenant en outre :
la détermination, dans le cas où l'appareil de télécommunication (10) ne reçoit pas de message dans une période d'écoute (78.2), d'une période d'écoute (86) supplémentaire avant la période d'écoute (78.3) régulière suivante.

9. Procédé exécuté sur un système (94, 96) en vue d'établir une communication avec un appareil de télécommunication (10) dans un réseau de télécommunication mobile (13) représentant un réseau de type GSM ou un réseau de type UMTS, dans lequel chacun du système (94, 96) et de l'appareil de télécommunication (10) comprend une station mobile dans ledit réseau GSM ou un équipement utilisateur dans ledit réseau UMTS,
le système (94, 96) comprenant :
une section de détermination du temps qui communique directement avec une référence de temps (70) indépendante d'une structure de séquence de temps utilisée dans le réseau de télécommunication mobile (13),
le procédé comprenant :
la mise en tampon d'une demande devant être communiquée à l'appareil de télécommunication (10),
la sélection d'un instant de communication (84) qui est spécifique à l'appareil de télécommunication (10) ou à un groupe (15) d'appareils de télécommunication comprenant l'appareil de télécommunication (10), et
l'envoi de la demande mise en tampon à l'appareil de télécommunication (10) lorsque l'instant actuel défini par la section de détermination du temps (14) correspond à l'instant sélectionné de communication (84).

10. Procédé exécuté dans un réseau de télécommunication mobile (13) en vue d'établir une communication avec un appareil de télécommunication (10) comprenant une station mobile dans un réseau de type GSM ou un équipement utilisateur dans un réseau de type UMTS, dans lequel
le réseau de télécommunication mobile (13) est un réseau de type GSM ou un réseau de type UMTS, comprenant :
une section de détermination du temps qui communique directement avec une référence de temps (70) indépendante d'une structure de séquence de temps utilisée dans le réseau de télécommunication mobile (13),
le procédé comprenant :
la mise en tampon d'un message entrant (82) reçu en provenance d'un correspondant de l'appareil de télécommunication (10),
la sélection d'un instant de communication (84) qui est spécifique à l'appareil de télécommunication (10) ou à un groupe (15) d'appareils de télécommunication comprenant l'appareil de télécommunication (10),
l'envoi du message (82) mis en tampon à l'appareil de télécommunication (10) lorsque l'instant actuel défini par la section de détermination du temps (14) correspond à l'instant sélectionné de communication (84).

11. Procédé selon l'une quelconque des revendications 1 à 10, dans lequel la référence de temps est externe à la fois à l'appareil de télécommunication (10) et au réseau de télécommunication mobile (13).

12. Procédé selon l'une quelconque des revendications 1 à 11, dans lequel
la section de détermination du temps (14) récupère des informations sur le temps à partir de signaux de radiofréquence reçus en provenance d'un système de navigation par satellite.

13. Ensemble (42, 44, 46) formé d'un ou plusieurs circuits intégrés comprenant :
une section de télécommunication (12) conçue pour établir une communication avec un réseau de télécommunication mobile (13) représentant un réseau de type GSM ou un réseau de type UMTS,
une section de détermination du temps (14) conçue pour déterminer un instant actuel sur la base d'informations sur le temps provenant d'un système de navigation par satellite,
une section de gestion de l'énergie (24) conçue pour mettre au moins partiellement en service la section de télécommunication (12) lorsque l'instant actuel défini par la section de détermination de temps correspond à un instant de début (84) d'une période d'écoute (78) de la section de télécommunication (12),
la section de gestion de l'énergie (24) étant en outre conçue pour mettre au moins partiellement hors service la section de télécommunication (12) au plus tard à la fin de la période d'écoute (78), et
l'ensemble d'un ou plusieurs circuits intégrés étant configuré pour exécuter le procédé conforme à l'une quelconque des revendications 1 à 8.

14. Dispositif de télécommunication (10) comprenant une station mobile dans un réseau de type GSM ou un équipement utilisateur dans un réseau de type UMTS comprenant l'ensemble (42, 44, 46) d'un ou plusieurs circuits intégrés selon la revendication 13.

15. Dispositif de télécommunication (10) selon la revendication 14, dans lequel
le dispositif de télécommunication (10) comprend un dispositif de poursuite ou de mesure.

16. Support pouvant être lu par une machine qui comprend une pluralité d'instructions de programme, les instructions de programmes étant conçues pour amener au moins un processeur à exécuter le procédé conforme à l'une quelconque des revendications 1 à 12.
